# EUROPÄISCHE PATENTSCHRIFT

(11) **EP 1 557 002 B1**
(45) Veröffentlichungstag und Bekanntmachung des Hinweises auf die Patenterteilung: **19.09.2007**
(21) Anmeldenummer: 03776809.0
(22) Anmeldetag: 21.10.2003
(51) Int. Cl.: H04L 12/28

(54) **VERFAHREN UND EINRICHTUNG ZUR AUSWAHL EINES NETZZUGANGS ZU EINEM ODER MEHREREN DATENNETZEN ÜBER EIN TELEKOMMUNIKATIONSENDGERÄT**
METHOD AND DEVICE FOR SELECTING NETWORK ACCESS TO ONE OR MORE DATA NETWORKS BY MEANS OF A TELECOMMUNICATION TERMINAL
PROCEDE ET DISPOSITIF POUR SELECTIONNER UN ACCES A UN OU A PLUSIEURS RESEAUX DE DONNEES PAR L'INTERMEDIAIRE D'UN TERMINAL DE TELECOMMUNICATION

(30) Priorität: 25.10.2002 DE 10249867
(43) Veröffentlichungstag der Anmeldung: 27.07.2005
(73) Patentinhaber: SIEMENS AKTIENGESELLSCHAFT, 80333 München (DE)
(72) Erfinder: FINKENZELLER, Michael, 81373 München (DE); HUTH, Hans-Peter, 80638 München (DE)
(86) Internationale Anmeldenummer: PCT/DE2003/003507
(87) Internationale Veröffentlichungsnummer: WO 2004/040850

(56) Entgegenhaltungen:
- WO-A-01/35585
- WO-A-01/89142
- WO-A-02/41583
- WO-A-03/073700
- US-B1- 6 356 541

## Beschreibung

Die Erfindung betrifft ein Verfahren und eine Einrichtung zur Auswahl eines Netzzugangs zu einem oder mehreren Datennetzen über ein Telekommunikationsendgerät.

Neue Generationen von Kommunikationsendgeräten, insbesondere von Mobilfunkgeräten, Computern oder Laptops, weisen im allgemeinen mehrere unterschiedliche Schnittstellen auf, über die man Zugang zu unterschiedlichen Datennetzen erhält. Beispielsweise kann ein Notebook Einsteckkarten für GSM, Wireless LAN und Bluetooth aufweisen. Über diese Einsteckkarten kann ein Zugang zu Mobilfunknetzen, Festnetzen sowie zum Internet oder zu anderen Computern ermöglicht werden. Für die unterschiedlichen Datennetze gibt es mittlerweile eine Vielzahl von Anbietern, die sowohl drahtlose als auch drahtgebundene Verbindungen zu den Datennetzen herstellen. Hierbei handelt es sich insbesondere um Netzbetreiber für Fest- und Mobilnetze sowie um verschiedene Internet-Provider, welche Zugang zum Internet ermöglichen. Die Anbieter verwenden verschiedene Zugangstechniken und unterscheiden sich sowohl hinsichtlich von Qualität als auch hinsichtlich des Preises.

Der Benutzer von Datennetzen möchte den für seine Anforderungen adäquaten Netzzugang aus der Vielzahl von Zugangsanbietern auswählen. Hierbei spielen für ihn insbesondere der Preis, die vom Anbieter bereitgestellten Dienste (z.B.
E-Mails, Video-Streaming etc.) sowie die Qualität der Verbindung eine Rolle. Bei der Qualität sind technisch messbare Parameter des Zugangsanbieters, beispielsweise die Datenrate, die Datenverzögerung oder der Datenverlust entscheidend. Es sind jedoch auch subjektive Eindrücke von Bedeutung, beispielsweise die Bedienungsfreundlichkeit der Oberfläche zum Einwählen in das Datennetz. Bei der Verwendung des Datennetzes zur Sprach- oder Bildübertragung spielen ferner die Sprach- oder Bildqualität sowie die Zuverlässigkeit des Netzzugangs eine wichtige Rolle.

Insbesondere bei mobilen Kommunikationsendgeräten steht der Benutzer vor dem Problem, dass er an seinem momentanen Standort den optimalen Zugangsdienst für seine Zwecke verwenden möchte. Üblicherweise muss er hierzu bei unterschiedlichen Netzanbietern oder anderen Endbenutzern nachfragen. Da der Benutzer jedoch nicht immer die Möglichkeit oder die Zeit hat, bei anderen Benutzern oder Netzanbietern nachzufragen, ist die Auswahl des optimalen Netzzugangs oftmals schwierig. Darüber hinaus messen Netzanbieter zwar oft intern ihre Übertragungsqualitäten, geben diese Daten jedoch nicht an die Endbenutzer weiter. Ferner werden diese Daten oft nicht nach objektiven Kriterien ermittelt, so dass sie für den Benutzer nicht aussagekräftig sind.

Mittlerweile gibt es schon zentral verwaltete Datenbanken, in denen Profile von verschiedenen Netzanbietern gespeichert sind. Diese Datenbanken enthalten jedoch meistens keine Aussagen über die Qualitäten der Netzzugangsdienste. Darüber hinaus hat der Endbenutzer die Möglichkeit auf Messungen und Berichte aus der Presse (z.B. Stiftung Warentest oder CT-Magazin) sowie Rating Systeme, beispielsweise im Internet veröffentlichte Bewertungen von Netzen, zuzugreifen. Hierbei ist das Auffinden des optimalen Netzzugangs mit einem ziemlichen Zeitaufwand verbunden und die Bewertungen sind oft nicht aktualisiert.

Aus der Druckschrift [1] ist eine Vorrichtung und ein Verfahren zur Auswahl von Netzzugängen in einem Telekommunikationsendgerät bekannt, bei dem alle verfügbaren Netzschnittstellen sowie Netzzugangsanbieter erfasst werden. Aus den erfassten Daten wird ein optimaler Netzzugang mittels einer Auswahlvorrichtung ausgewählt, wobei auch Kriterien hinsichtlich Preis und Qualität des Netzzugangs berücksichtigt werden können. Zur Auswahl des Netzzugangs werden zunächst Verbindungen zu den einzelnen Netzanbietern hergestellt, um Informationen über die Qualität der einzelnen Netzzugänge zu erhalten.

In dem Dokument [2] sind ein Verfahren und eine Vorrichtung zum dynamischen Auffinden eines Netzwerkpfades in einem computerbasierten Netzwerk beschrieben. Hierbei werden in Antwort auf eine Benutzeranfrage die Datenübertragungskosten von möglichen Netzwerkpfaden ermittelt und aus diesen Pfaden der kostengünstigste Pfad ausgewählt.

Aus der WO 01/35585 ist ein Verfahren zur Auswahl eines von mehreren Netzzugängen über ein Telekommunikationsendgerät anhand von Netzzugangsinformationen bekannt. Die Netzzugangsinformationen sind hier die Fähigkeiten der zur Verfügung stehenden Netzzugänge und entsprechen Angaben der Provider der Netzzugänge.

Aufgabe der Erfindung ist es, das eingangs genannte Verfahren dahingehend zu verbessern, dass eine objektive und einfache Auswahl des für den Benutzer optimalen Netzzugangs ermöglicht wird.

Diese Aufgabe wird gemäß den Merkmalen der unabhängigen Patentansprüche gelöst. Weiterbildungen der Erfindung ergeben sich aus den abhängigen Ansprüchen.

In dem erfindungsgemäßen Verfahren zur Auswahl eines Netzzugangs zu einem oder mehreren Datennetzen über ein Telekommunikationsendgerät werden in einem ersten Schritt Netzzugangsinformationen analysiert, die von dem Telekommunikationsendgerät und/oder weiteren Telekommunikationsendgeräten während Netzverbindungen über verschiedene Netzzugänge ermittelt wurden. In einem zweiten Schritt wird dann ein Netzzugang auf der Basis der analysierten Netzzugangsinformationen ausgewählt. Im Gegensatz zur Druckschrift [1] ist somit zur Auswahl eines geeigneten Netzzugangs kein Aufbau einer Verbindung zu den unterschiedlichen Netzzugangsanbietern erforderlich, sondern es kann auf bereits im Vorfeld protokollierte Netzzugangsinformationen zurückgegriffen werden. Da die Netzzugangsinformationen durch das Telekommunikationsendgerät selbst bzw. durch weitere Telekommunikationsendgeräte ermittelt wurden, sind die Informationen auf objektive Art und Weise bestimmt worden, ohne dass auf die meist nicht verlässlichen Informationen von Netzzugangsanbietern zurückgegriffen werden muss.

Der Auswahlvorgang des erfindungsgemäßen Verfahrens umfasst vorzugsweise die Auswahl von einem oder mehreren Netzzugangsanbietern, z.B. eines Mobilfunknetzbetreibers, der eine Verbindung des Telekommunikationsendgeräts zu einem Internetzugangsknoten ermöglicht, und eines Internetproviders, der von dem Zugangsknoten die Verbindung zum Internet herstellt. Ferner umfasst der Auswahlvorgang vorzugsweise auch die für den Verbindungsaufbau mit den Anbietern erforderliche Netzschnittstelle des Telekommunikationsendgeräts. Es werden somit bei der Auswahl nicht nur der Netzzugangsanbieter, sondern auch die im Telekommunikationsgerät vorhandenen Netzschnittstellen berücksichtigt. Damit ist gewährleistet, dass für die ausgewählten Netzzugangsanbieter auch die entsprechende Schnittstelle zum Verbindungsaufbau im Telekommunikationsendgerät vorhanden ist.

Die Netzzugangsinformationen umfassen insbesondere Informationen bezüglich der Qualität der Netzzugänge und/oder der bei Netzverbindungen über die Netzzugänge entstehenden Kosten. Kriterien für die Qualität der Netzzugänge sind insbesondere die verfügbaren Dienste der Netzzugänge und/oder die Verbindungsqualität der Netzzugänge. Die Informationen über die Verbindungsqualität sind insbesondere Informationen über die Häufigkeit von Abbrüchen und Unterbrechungen und/oder Bandbreiten und/oder Datenverlusten und/oder Datenverzögerungen während Netzverbindungen über die Netzzugänge.

In einer bevorzugten Ausführungsform des erfindungsgemäßen Verfahrens werden die Netzzugangsinformationen anhand von einstellbaren Parametern analysiert. Die einstellbaren Parameter sind hierbei vorzugsweise benutzerspezifische Anforderungen an die Qualität der Netzzugänge, beispielsweise die erwünschte Datenübertragungsrate oder die erwünschten zur Verfügung stehenden Dienste, wie E-Mail, Speicherplatz für eine Homepage und ähnliches. Es können aber auch Parameter berücksichtigt werden, die von der vom Benutzer verwendeten Applikation abhängen. Beispielsweise können für eine Videoapplikation die Parameter derart eingestellt werden, dass eine hohe Datenübertragungsrate ohne Verzögerungen gewährleistet ist.

Die Parameter können ferner Informationen hinsichtlich des Standortes des Telekommunikationsgeräts umfassen. Diese Funktion ist insbesondere bei mobilen Telekommunikationsendgeräten wichtig, da in der Analyse der Netzzugangsinformationen auch berücksichtigt werden kann, ob ein Netzzugangsdienst an dem Standort des Telekommunikationsendgeräts überhaupt zur Verfügung steht. Vorzugsweise wird der Standort des Telekommunikationsendgeräts automatisch ermittelt, beispielsweise über GPS. Der Standort kann jedoch auch manuell über den Benutzer eingegeben werden. Eine andere Möglichkeit besteht in der Abfrage bei einem Netzzugangsanbieter, sofern der Netzzugangsanbieter einen Dienst zur Ermittlung des Standorts des Telekommunikationsendgeräts zur Verfügung stellt.

In einer weiteren bevorzugten Ausführungsform der Erfindung werden nur Netzzugangsinformationen analysiert, die von dem Telekommunikationsendgerät und/oder den weiteren Telekommunikationsendgeräten in einem vorbestimmten Umkreis um den Standort des Telekommunikationsendgeräts ermittelt wurden. Es wird somit eine Vorauswahl der Netzzugangsinformationen getroffen, wobei weniger relevante Informationen von Telekommunikationsendgeräten von entfernten Standorten nicht mehr berücksichtigt werden. Es kann somit eine schnellere Analyse der relevanten Netzzugangsinformationen durchgeführt werden.

In einer weiteren Ausführungsform werden die in den Telekommunikationsendgeräten ermittelten Netzzugangsinformationen auch den Netzzugangsanbietern zur Verfügung gestellt, so dass diese Anbieter die Möglichkeit haben, aufgrund der bereitgestellten Informationen ihre Dienste zu verbessern. Die Informationen können darüber hinaus auch Netzdienstanbietern zur Verfügung gestellt werden, die lediglich Dienste im Netz bereit stellen, ohne den Zugang in das Netz selbst zu gewährleisten, wie z.B. E-Mail-Dienst-Provider.

Damit die gesammelten protokollierten Netzzugangsinformationen immer aktuell sind, werden die Netzzugangsinformationen in einer bevorzugten Ausführungsform der Erfindung in regelmäßigen Abständen aktualisiert. In einer weiteren Ausführungsform können die Netzzugangsinformationen ferner durch benutzerspezifische Kommentare ergänzt werden.

In einer weiteren Ausgestaltung der Erfindung sind die Netzzugangsinformationen auf einem Zentralrechner gespeichert.
Die Informationen können jedoch auch dezentral in dem Telekommunikationsendgerät oder den weiteren Telekommunikationsendgeräten gespeichert sein.

In einer besonders bevorzugten Ausführungsform werden ferner anhand des ausgewählten Netzzugangs die Anforderungen an den für den ausgewählten Netzzugang erforderlichen Standort des Telekommunikationsendgeräts ermittelt. Dies ist insbesondere bei mobilen Telekommunikationsendgeräten von Vorteil, da der Benutzer hierdurch erfährt, dass er sich ggf. zur Einwahl in den optimalen Netzzugang an einen anderen Standort begeben muss. In einer besonders bevorzugten Ausführungsform wird dem Benutzer anhand eines Navigationssystems der Weg von seinem derzeitigen Standort zu dem für den ausgewählten Netzzugang erforderlichen Standort mitgeteilt.

In einer bevorzugten Ausführungsform der Erfindung steht das Telekommunikationsendgerät mit den weiteren Telekommunikationsendgeräten in Datenaustauschverbindung. Diese Datenaustauschverbindung ist vorzugsweise direkt, d.h. die Datenaustauschverbindung erfolgt ohne Zwischenschaltung weiterer Geräte, insbesondere über wireless-LAN und/oder ein Adhoc-Netz und/oder Bluetooth-Schnittstellen und/oder Infrarotschnittstellen. Hierbei kann der ausgewählte Netzzugang ein Netzzugang sein, der über eines der weiteren Telekommunikationsendgeräte erfolgt, wobei Daten des ausgewählten Netzzugangs über die Datenaustauschverbindung an das Telekommunikationsendgerät übertragbar sind. Bei dem Telekommunikationsendgeräten handelt es sich vorzugsweise um Mobilfunkgeräte und/oder um Computer.

In einer weiteren bevorzugten Ausführungsform der Erfindung beruhen die ermittelten Netzzugangsinformationen vorzugsweise auf passiven Messungen in dem Telekommunikationsendgerät und/oder den weiteren Telekommunikationsendgeräten. Unter passiver Messung wird hierbei eine Messung verstanden, die ausschließlich auf dem Telekommunikationsendgerät und/oder den weiteren Telekommunikationsendgeräten durchgeführt wurde, d.h. bei der Messung sind keine weiteren Rechner, insbesondere keine Server der Netzzugangsanbieter, beteiligt. Folglich kann auf die Einspielung von Mess-Software in das Datennetz verzichtet werden.

Neben dem oben beschriebenen Verfahren betrifft die Erfindung auch eine Einrichtung zur Auswahl eines Netzzugangs zu einem oder mehreren Datennetzen über ein Telekommunikationsendgerät, wobei mit dieser Einrichtung das oben beschriebene erfindungsgemäße Verfahren durchführbar ist. Die Einrichtung umfasst dabei vorzugsweise Mittel zum Analysieren von Netzzugangsinformationen, die von dem Telekommunikationsendgerät und/oder weiteren Telekommunikationsendgeräten während Netzverbindungen über verschiedene Netzzugänge ermittelt worden sind, sowie Mittel zum Auswählen eines Netzzugangs auf der Basis der analysierten Netzzugangsinformationen. Vorzugsweise ist die Einrichtung hierbei in ein Telekommunikationsendgerät integriert.

Ausführungsbeispiele der Erfindung werden nachfolgend anhand der Zeichnung dargestellt und erläutert.

Es zeigt:

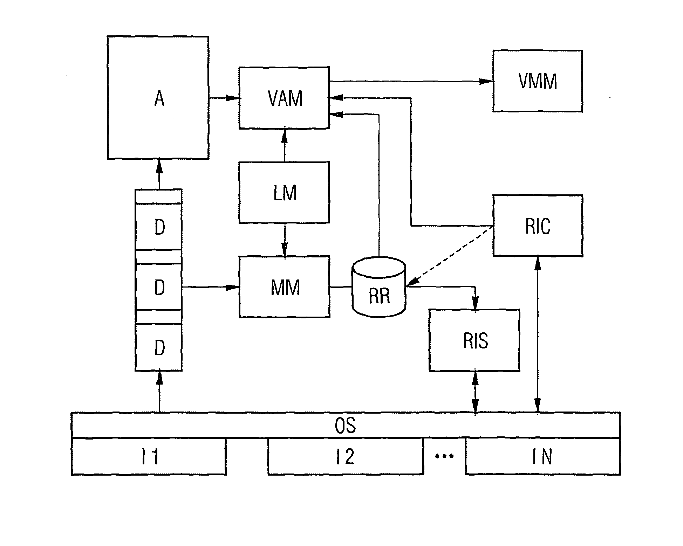

- Fig. 1: eine schematische Darstellung einer Einrichtung zur Durchführung einer Ausführungsform des erfindungsgemäßen Verfahrens.

Fig. 1 zeigt eine erfindungsgemäße Einrichtung zur Auswahl eines Netzzugangs zu Datennetzen über ein Telekommunikationsendgerät, beispielsweise ein Handy. Die in Figur 1 dargestellten Bausteine der Einrichtung sind vorzugsweise alle in einem einzelnen Telekommunikationsendgerät integriert. Es besteht jedoch auch die Möglichkeit, einzelne Bausteine in einem Zentralrechner oder in weiteren Telekommunikationsendgeräten zu implementieren.

Die schematisch angedeuteten Bausteine I1 bis IN stellen Netzschnittstellen des Telekommunikationsendgeräts dar. Die Schnittstellen werden dabei von einem Betriebssystem OS verwaltet. Dieses Betriebssystem verwaltet ferner alle im nachfolgenden beschriebenen Bausteine der erfindungsgemäßen Einrichtung. Über die Schnittstellen I1 bis IN gelangen Daten D aus einem Datennetz zu einer in dem Telekommunikationsendgerät implementierten Anwendung/Applikation A, in der diese Daten weiterverarbeitet werden. Die Daten werden ferner zu einem Monitor-Modul MM geleitet, in dem die Qualität der aktuellen Netzverbindung zwischen dem Telekommunikationsendgerät und dem entsprechenden Zugangsserver bzw. einem weiteren Telekommunikationsendgerät protokolliert wird und zur Speicherung in einem weiteren Modul RR aufbereitet wird. Die Aufbereitung erfolgt hierbei dadurch, dass die protokollierten Daten mit Daten aus einem Lokalisierungs-Modul LM verknüpft werden.

In dem Lokalisierungs-Modul wird der momentane geographische Standort des Telekommunikationsendgeräts ermittelt. Die Ermittlung erfolgt entweder automatisch, beispielsweise durch das Positionierungssystem GPS (Global Positioning System), oder der Benutzer des Endgeräts gibt die Ortsinformationen des Standorts manuell ein. Der Standort kann ferner durch eine Abfrage an den Provider der aktuellen Datennetzverbindung ermittelt werden.

Die im Modul MM verknüpften Daten werden in einem Modul RR (RR = Reputation Repository) gespeichert. In diesem Modul ist somit die protokollierte Qualität der aktuellen Netzverbindung abgelegt. In dem Modul sind darüber hinaus die Informationen hinsichtlich der Qualität von früheren Netzverbindungen mit dem gleichen oder anderen Netzzugangsprovidern gespeichert. Das Modul RR stellt folglich eine vom Telekommunikationsendgerät erzeugte Datenbank hinsichtlich der Qualität früherer Netzzugänge dar. Es ist deshalb nicht mehr erforderlich, auf Informationen eines Netzzugangsproviders zurückzugreifen, die meistens nicht neutral und verlässlich sind.

Das Modul RR steht mit einem Verbindungs-Analyse-Modul VAM in Verbindung, welches wiederum applikationsspezifische Informationen von der Anwendung A erhält. Dieses Modul VAM analysiert anhand von Parametern, die von der Applikation A abhängen können und/oder vom Benutzer frei wählbar sind, die Informationen aus dem Modul RR. Bei den Parametern, die das Modul VAM verwendet, handelt es sich beispielsweise um die vom Benutzer erwünschte Datenqualität oder Datenübertragungsrate.

Das Modul VAM greift jedoch nicht nur auf im Modul RR gespeicherte Daten zu. Es ist auch möglich, Informationen über die Qualität von Netzzugängen über andere Telekommunikationsendgeräte in die Analyse einzubeziehen. Hierzu ist das Modul VAM mit dem Modul RIC (RIC = Reputation Information Client) verbunden, welches Anfragen an weitere Telekommunikationsendgeräte hinsichtlich der in diesen Geräten protokollierten Netzzugangsinformationen richtet.

Das Modul RIC ist ferner mit dem Modul RR gekoppelt, wie durch die gestrichelte Linie in Figur 1 angedeutet ist. Da im Modul RR auch Informationen bezüglich des Standorts des Telekommunikationsendgeräts gespeichert sind, kann durch die Verknüpfung der Module RIC und RR ferner eine Auswahl der von dem RIC zu befragenden Telekommunikationsendgeräte hinsichtlich ihrer Standorte getroffen werden. Insbesondere können nur Telekommunikationsendgeräte befragt werden, die sich in einem definierten Bereich um das anfragende Telekommunikationsendgerät befinden. Dies ist insbesondere bei Mobilfunknetzen von Vorteil, da in diesem Fall für den Benutzer nur die Informationen bezüglich der Verbindungsqualität in einem Umkreis um seinen Standort interessant sind.

Über ein weiteres Modul RIS (RIS = Reputation Information Service) wird ermöglicht, dass andere Telekommunikationsendgeräte auch auf die in dem Modul RR gespeicherten Daten zugreifen. Das Modul RIS steht nämlich mit dem Modul RR in Verbindung und beantwortet über die Netzschnittstellen I1 bis IN Anfragen von anderen Telekommunikationsendgeräten hinsichtlich der im RR gespeicherten Informationen.

Das Analysemodul VAM steht ferner mit einem Verbindungs-Management-Modul VMM in Verbindung. Dieses Modul trifft anhand der im Modul VAM analysierten Daten eine Entscheidung, welcher Netzzugang zur Verbindung mit dem Datennetz ausgewählt werden soll. Hierbei werden alle möglichen Kombinationen aus den möglichen physikalischen Schnittstellen I1 bis IN und den verfügbaren Netzzugangsanbietern ermittelt und daraus der für den Benutzer optimale Netzzugang, insbesondere hinsichtlich der Verbindungsqualität und des Verbindungsentgelts, bestimmt. Das Modul VMM kann ferner Informationen hinsichtlich notwendiger Maßnahmen geben, die erforderlich sein können, um den optimalen Netzzugang zu gewährleisten. Insbesondere kann dem Benutzer eines Mobilfunkendgeräts mitgeteilt werden, dass er seinen Standort ändern muss, da von dem derzeitigen Standort keine Verbindung zu dem optimalen Netzzugang möglich ist. Eine weitere Maßnahme könnte der Wechsel der physikalischen Schnittstelle sein.

Durch die oben beschriebene Einrichtung wird es somit möglich, die Netzzugangsdaten von mehreren Telekommunikationsendgeräten zu analysieren und basierend auf diesen Daten einen optimalen Netzzugang herauszufinden, wobei die Auswahl des Netzzugangs unabhängig von Informationen der Netzzugangsprovider ist.

Literaturverzeichnis:
[1] WO 02/41580 A1
[2] US 6 275 470 B1

## Patentansprüche

1. Verfahren zur Auswahl eines Netzzugangs zu einem oder mehreren Datennetzen über ein Telekommunikationsendgerät mit den Schritten:
- Analysieren (VAM) von Netzzugangsinformationen (RIC), die von weiteren Telekommunikationsendgeräten während Netzverbindungen über verschiedene Netzzugänge ermittelt wurden;
- Auswählen (VMM) eines Netzzugangs auf der Basis der analysierten Netzzugangsinformationen (RR),
**dadurch gekennzeichnet, dass** ferner anhand des ausgewählten Netzzugangs Informationen über den für den ausgewählten Netzzugang erforderlichen Standort des Telekommunikationsendgeräts ermittelt werden.

2. Verfahren nach Anspruch 1, mit den Schritten:
- Analysieren (VAM) von Netzzugangsinformationen (RIC, RR), die von dem Telekommunikationsendgerät und weiteren Telekommunikationsendgeräten während Netzverbindungen über verschiedene Netzzugänge ermittelt wurden;
- Auswählen (VMM) eines Netzzugangs auf der Basis der analysierten Netzzugangsinformationen (RIC, RR).

3. Verfahren nach Anspruch 1 oder 2, bei dem das Auswählen (VMM) des Netzzugangs die Auswahl eines oder mehrerer Netzzugangsanbieter und der für den Verbindungsaufbau mit den Netzzugangsanbietern erforderlichen Netzschnittstelle (I1...IN) des Telekommunikationsendgeräts umfasst.

4. Verfahren nach einem der vorangehenden Ansprüche, bei dem die Netzzugangsinformationen (RIC, RR) Informationen bezüglich der Qualität der Netzzugänge und/oder der bei Netzverbindungen über die Netzzugänge entstehenden Kosten umfassen.

5. Verfahren nach Anspruch 4, bei dem die Informationen bezüglich der Qualität der Netzzugänge Informationen über die verfügbaren Dienste der Netzzugänge und/oder die Verbindungsqualität der Netzzugänge umfassen.

6. Verfahren nach Anspruch 5, bei dem die Informationen über die Verbindungsqualität der Netzzugänge Informationen über die Häufigkeit von Abbrüchen und Unterbrechungen und/oder Bandbreiten und/oder Datenverluste und/oder Datenverzögerungen während Netzverbindungen über die Netzzugänge umfassen.

7. Verfahren nach einem der vorhergehenden Ansprüche, bei dem die Netzzugangsinformationen (RIC, RR) anhand von einstellbaren Parametern analysiert werden.

8. Verfahren nach einem der vorhergehenden Ansprüche, bei dem die Parameter benutzerspezifische und/oder applikationsspezifische Anforderungen an die Qualität der Netzzugänge umfassen.

9. Verfahren nach einem der vorhergehenden Ansprüche, bei dem die Parameter Informationen bezüglich des Standorts des Telekommunikationsendgeräts umfassen.

10. Verfahren nach Anspruch 9, bei dem der Standort des Telekommunikationsendgeräts automatisch ermittelt wird (LM).

11. Verfahren nach Anspruch 9, bei dem der Standort des Telekommunikationsendgeräts von dem Benutzer des Telekommunikationsendgeräts bestimmt wird.

12. Verfahren nach Anspruch 9, bei dem der Standort des Telekommunikationsendgeräts durch Abfrage bei einem Netzzugangsanbieter ermittelt wird.

13. Verfahren nach einem der vorhergehenden Ansprüche, bei dem nur Netzzugangsinformationen (RIC, RR) analysiert werden, die von dem Telekommunikationsendgerät und/oder den weiteren Telekommunikationsendgeräten in einem vorbestimmten Umkreis um den Standort des Telekommunikationsendgeräts ermittelt wurden.

14. Verfahren nach einem der vorhergehenden Ansprüche, bei dem die Netzzugangsinformationen (RIC, RR) Netzdienstanbietern und/oder Netzzugangsanbietern zur Verfügung gestellt werden.

15. Verfahren nach einem der vorhergehenden Ansprüche, bei dem die Netzzugangsinformationen (RIC, RR) in regelmäßigen Abständen aktualisierte Informationen sind.

16. Verfahren nach einem der vorhergehenden Ansprüche, bei dem die Netzzugangsinformationen (RIC, RR) benutzerspezifische Kommentare umfassen.

17. Verfahren nach einem der vorhergehenden Ansprüche, bei dem die Netzzugangsinformationen (RIC, RR) auf einem Zentralrechner und/oder dem Telekommunikationsgerät und/oder den weiteren Telekommunikationsendgeräten gespeichert sind.

18. Verfahren nach einem der vorangehenden Ansprüche, bei dem anhand eines Navigationssystem der Weg von dem momentanen Standort des Telekommunikationsendgeräts zu dem für den ausgewählten Netzzugang erforderlichen Standort des Telekommunikationsendgeräts ermittelt wird.

19. Verfahren nach einem der vorhergehenden Ansprüche, bei dem das oder die mehreren Datennetze, für die ein Netzzugang ausgewählt wird, das Internet und/oder ein Telekommunikationsfestnetz und/oder ein Mobilfunknetz ist/sind.

20. Verfahren nach einem der vorhergehenden Ansprüche, bei dem das Telekommunikationsendgerät mit den weiteren Telekommunikationsendgeräten in Datenaustauschverbindung steht.

21. Verfahren nach Anspruch 20, bei dem die Datenaustauschverbindung zwischen den Telekommunikationsendgeräten ohne Zwischenschaltung weiterer Geräte erfolgt, insbesondere über wireless-LAN und/oder ein Adhoc-Netz und/oder Bluetooth-Schnittstellen und/oder Infrarotschnittstellen.

22. Verfahren nach Anspruch 20 oder 21, bei dem der ausgewählte Netzzugang ein Netzzugang ist, der über eines der weiteren Telekommunikationsendgeräte erfolgt, wobei Daten (D) des ausgewählten Netzzugangs über die Datenaustauschverbindung an das Telekommunikationsendgerät übertragbar sind.

23. Verfahren nach einem der vorhergehenden Ansprüche, bei dem das Telekommunikationsendgerät und/oder die weiteren Telekommunikationsendgeräte Mobilfunkgeräte und/oder Computer sind.

24. Verfahren nach einem der vorhergehenden Ansprüche, bei dem die Netzzugangsinformationen (RIC, RR) mit Messungen ermittelt wurden, die ausschließlich auf dem Telekommunikationsendgerät und/oder den weiteren Telekommunikationsendgeräten durchgeführt wurden.

25. Einrichtung zur Auswahl eines Netzzugangs zu einem oder mehreren Datennetzen über ein Telekommunikationsendgerät, mit der ein Verfahren nach einem der vorhergehenden Ansprüche durchführbar ist, umfassend:
- Mittel (VAM) zum Analysieren von Netzzugangsinformationen, die von weiteren Telekommunikationsendgeräten während Netzverbindungen über verschiedene Netzzugänge ermittelt wurden;
- Mittel (VMM) zum Auswählen eines Netzzugangs auf der Basis der analysierten Netzzugangsinformationen; **gekennzeichnet durch** Mittel mit denen ferner anhand des ausgewählten Netzzugangs Informationen über den für den ausgewählten Netzzugang erforderlichen Standort des Telekommunikationsendgeräts ermittelt werden.

26. Einrichtung nach Anspruch 25, umfassend:
- Mittel (VAM) zum Analysieren von Netzzugangsinformationen, die von dem Telekommunikationsendgerät und weiteren Telekommunikationsendgeräten während Netzverbindungen über verschiedene Netzzugänge ermittelt wurden.

27. Einrichtung nach Anspruch 25 oder 26, wobei die Einrichtung in einem Telekommunikationsendgerät integriert ist.

## Claims

1. Method for selecting a network access to one or more data networks by means of a telecommunication terminal, with the following steps:
- Analysing (VAM) network access information (RIC) which has been determined by additional telecommunication terminals during network connections via different network accesses;
- Selecting (VMM) a network access on the basis of the analysed network access information (RR),
**characterised in that**
information concerning the location of the telecommunication terminal required for the selected network access is determined with the aid of the selected network access.

2. Method according to claim 1, with the following steps:
- Analysing (VAM) network access information (RIC) which has been determined by the telecommunication terminal and additional telecommunication terminals during network connections via different network accesses;
- Selecting (VMM) a network access on the basis of the analysed network access information (RIC, RR).

3. Method according to claim 1 or 2, in which selecting (VMM) the network access includes selecting one or more network access providers and the network interface (I1...IN) of the telecommunication terminal which is needed in order to establish a connection with the network access providers.

4. Method according to one of the preceding claims, in which the network access information (RIC, RR) includes information concerning the quality of the network accesses and/or the costs incurred for network connections via said network accesses.

5. Method according to claim 4, in which the information concerning the quality of network accesses includes information on the services available from said network accesses and/or the connection quality of said network accesses.

6. Method according to Claim 5, in which the connection quality information of the network accesses includes information about the frequency of cut-outs and interruptions, and/or bandwidths, and/or data losses, and/or data delays, during network connections via the said network accesses.

7. Method according to one of the preceding claims, in which adjustable parameters are used to analyse the network access information (RIC, RR).

8. Method according to one of the preceding claims, in which the parameters include user-specific and/or application-specific requirements regarding network access quality.

9. Method according to one of the preceding claims, in which the parameters include information regarding the location of the telecommunication terminal.

10. Method according to claim 9, in which the location of the telecommunication terminal is determined automatically (LM).

11. Method according to claim 9, in which the location of the telecommunication terminal is identified by the user of the said telecommunication terminal.

12. Method according to claim 9, in which the location of the telecommunication terminal is determined by inquiring from a network access provider.

13. Method according to one of the preceding claims, in which only network access information (RIC, RR) which has been determined by the telecommunication terminal and/or by additional telecommunication terminals in a predefined area surrounding the location of the telecommunication terminal is analysed.

14. Method according to one of the preceding claims, in which network access information (RIC, RR) is made available to network service providers and/or network access providers.

15. Method according to one of the preceding claims, in which the network access information (RIC, RR) is updated at regular intervals.

16. Method according to one of the preceding claims, in which the network access information (RIC, RR) includes user-specific comments.

17. Method according to one of the preceding claims, in which the network access information (RIC, RR) is stored on a central computer and/or the telecommunication terminal and/or the additional telecommunication terminals.

18. Method according to one of the preceding claims, in which a navigation system determines the way from the present location of the telecommunication terminal to the location which the telecommunication terminal required for the selected network access.

19. Method according to one of the preceding claims, in which one or more data networks, for which a network access is selected, is or are the Internet and/or a fixed telecommunications network and/or a mobile radio communications network.

20. Method according to one of the preceding claims, in which the telecommunication terminal is connected to the additional telecommunication terminals in order to exchange data.

21. Method according to claim 20, in which the connection for exchanging data takes place without intermediate circuits via further devices, in particular via wireless LAN and/or via an ad hoc network and/or via Bluetooth interfaces and/or infrared interfaces.

22. Method according to claim 20 or 21, in which the selected network access is a network access which takes place via one of the additional telecommunication terminals and in which data (D) from the selected network access can be transmitted to the telecommunication terminal via the data exchange connection.

23. Method according to one of the preceding claims, in which the telecommunication terminal and/or the additional telecommunication terminals are mobile radio terminals and/or computers.

24. Method according to one of the preceding claims, in which the network access information (RIC, RR) has been determined by means of measurements carried out only on the telecommunication terminal and/or the additional telecommunication terminals.

25. Device for selecting a network access to one or more data networks by means of a telecommunication terminal, with which a method according to one of the preceding claims can be executed, comprising ;
- means (VAM) for analysing network access information which has been determined by additional telecommunication terminals during network connections via different network accesses;
- Means (VMM) for selecting a network access on the basis of the analysed network access information
**characterised by** means with which information concerning the location of the telecommunication terminal which is needed for the selected network access is determined with the aid of the selected network access.

26. Device according to claim 25, comprising
- means (VAM) for analysing network access information which has been determined by the telecommunication terminal and additional telecommunication terminals during network connections via different network accesses

27. Device according to claim 25 or 26, in which the device is integrated into a telecommunication terminal.

## Revendications

1. Procédé pour sélectionner un accès de réseau à un ou plusieurs réseaux de données au moyen d'un terminal de télécommunication comprenant les étapes suivantes :
- analyse (VAM) d'informations d'accès de réseau (RIC), qui ont été déterminées par d'autres terminaux de télécommunication lors de liaisons de réseau au moyen de différents accès de réseau ;
- sélection (VMM) d'un accès de réseau sur la base des informations d'accès de réseau (RR) analysées,
**caractérisé en ce que**, à l'aide de l'accès de réseau sélectionné, on détermine en outre des informations sur l'emplacement du terminal de télécommunication, nécessaire pour l'accès de réseau sélectionné.

2. Procédé selon la revendication 1, comprenant les étapes suivantes :
- analyse (VAM) d'informations d'accès de réseau (RIC, RR), qui ont été déterminées par le terminal de télécommunication et d'autres terminaux de télécommunication pendant des liaisons de réseau au moyen de différents accès de réseau ;
- sélection (VMM) d'un accès de réseau sur la base des informations d'accès de réseau (RIC, RR) analysées.

3. Procédé selon la revendication 1 ou 2, dans lequel la sélection (VMM) de l'accès de réseau comprend la sélection d'un ou de plusieurs fournisseurs d'accès de réseau et de l'interface de réseau (I1...IN du terminal de communication nécessaire pour l'établissement de la liaison avec les fournisseurs d'accès de réseau.

4. Procédé selon l'une quelconque des revendications précédentes, dans lequel les informations d'accès de réseau (RIC, RR) comprennent des informations concernant la qualité des accès de réseau, et/ou les frais occasionnés dans le cas de liaisons de réseau par les accès de réseau.

5. Procédé selon la revendication 4, dans lequel les informations concernant la qualité des accès de réseau comprennent des informations sur les services disponibles des accès de réseau et/ou la qualité de liaison des accès de réseau.

6. Procédé selon la revendication 5, dans lequel les informations sur la qualité de liaison des accès de réseau comprennent des informations sur la fréquence de coupures et d'interruptions et/ou de largeurs de bande et/ou de pertes de données et/ou de retards de données pendant des liaisons de données par les accès de réseau.

7. Procédé selon l'une quelconque des revendications précédentes, dans lequel les informations d'accès de réseau (RIC, RR) sont analysées à l'aide de paramètres réglables.

8. Procédé selon l'une quelconque des revendications précédentes, dans lequel les paramètres comprennent des exigences spécifiques à l'utilisateur et/ou spécifiques à l'application quant à la qualité des accès de réseau.

9. Procédé selon l'une quelconque des revendications précédentes, dans lequel les paramètres comprennent des informations concernant l'emplacement du terminal de télécommunication.

10. Procédé selon la revendication 9, dans lequel l'emplacement du terminal de télécommunication est déterminé automatiquement (LM).

11. Procédé selon la revendication 9, dans lequel l'emplacement du terminal de télécommunication est déterminé par l'utilisateur du terminal de télécommunication.

12. Procédé selon la revendication 9, dans lequel l'emplacement du terminal de télécommunication est déterminé par l'interrogation auprès d'un fournisseur d'accès de réseau.

13. Procédé selon l'une quelconque des revendications précédentes, dans lequel on analyse uniquement des informations d'accès de réseau (RIC, RR) qui ont été déterminées par le terminal de télécommunication et/ou les autres terminaux de télécommunication dans un environnement prédéfini autour de l'emplacement du terminal de télécommunication.

14. Procédé selon l'une quelconque des revendications précédentes, dans lequel les informations d'accès de réseau (RIC, RR) sont mises à la disposition de fournisseurs de services du réseau et/ou de fournisseurs d'accès de réseau.

15. Procédé selon l'une quelconque des revendications précédentes, dans lequel les informations d'accès de réseau (RIC, RR) sont des informations actualisées à des intervalles réguliers.

16. Procédé selon l'une quelconque des revendications précédentes, dans lequel les informations d'accès de réseau (RIC, RR) comprennent des commentaires spécifiques à l'utilisateur.

17. Procédé selon l'une quelconque des revendications précédentes, dans lequel les informations d'accès de réseau (RIC, RR) sont stockées sur un ordinateur central et/ou le terminal de télécommunication et/ou les autres terminaux de télécommunication.

18. Procédé selon l'une quelconque des revendications précédentes, dans lequel on détermine à l'aide d'un système de navigation le chemin allant de l'emplacement momentané du terminal de télécommunication à l'emplacement du terminal de télécommunication nécessaire pour l'accès de réseau sélectionné.

19. Procédé selon l'une quelconque des revendications précédentes, dans lequel le ou les plusieurs réseaux de données, pour lesquels un accès de réseau est sélectionné, est/sont Internet et/ou un réseau fixe de télécommunication et/ou un réseau de téléphonie mobile.

20. Procédé selon l'une quelconque des revendications précédentes, dans lequel le terminal de télécommunication est en liaison d'échanges de données avec les autres terminaux de télécommunication.

21. Procédé selon la revendication 20, dans lequel la liaison d'échanges de données entre les terminaux de télécommunication s'effectue sans intercalage d'autres appareils, en particulier au moyen de wireless-LAN et/ou d'un réseau Adhoc et/ou d'interfaces Bluetooth et/ou d'interfaces infrarouges.

22. Procédé selon la revendication 20 ou 21, dans lequel l'accès de réseau sélectionné est un accès de réseau qui s'effectue par l'un des autres terminaux de télécommunication, des données (D) de l'accès de réseau sélectionné pouvant être transmises par la liaison d'échanges de données au terminal de télécommunication.

23. Procédé selon l'une quelconque des revendications précédentes, dans lequel le terminal de télécommunication et/ou les autres terminaux de télécommunication sont des appareils de téléphonie mobile et/ou des ordinateurs.

24. Procédé selon l'une quelconque des revendications précédentes, dans lequel les informations d'accès de réseau (RIC, RR) ont été déterminées avec des mesures qui ont été effectuées exclusivement sur le terminal de télécommunication et/ou les autres terminaux de télécommunication.

25. Dispositif pour sélectionner un accès de réseau à un ou plusieurs réseaux de données au moyen d'un terminal de télécommunication, avec lequel un procédé, selon l'une quelconque des revendications précédentes, peut être réalisé comprenant :
- des moyens (VAM) pour l'analyse d'informations d'accès de réseau, qui ont été déterminées par d'autres terminaux de télécommunication pendant des liaisons de réseau au moyen de différents accès de réseau ;
- des moyens (VMM) pour la sélection d'un accès de réseau sur la base des informations d'accès de réseau analysées ;
**caractérisé par** des moyens avec lesquels, à l'aide de l'accès de réseau sélectionné, on détermine en outre des informations sur l'emplacement du terminal de télécommunication nécessaire pour l'accès de réseau sélectionné.

26. Dispositif selon la revendication 25, comprenant :
- des moyens (VAM) pour analyser des informations d'accès de réseau, qui ont été déterminées par le terminal de télécommunication et d'autres terminaux de télécommunication pendant des liaisons de réseau au moyen de différents accès de réseau.

27. Dispositif selon la revendication 25 ou 26, le dispositif étant intégré dans un terminal de télécommunication.
